# FASCICULE DE BREVET EUROPEEN

(11) **EP 0 921 293 B1**
(45) Date de publication et mention de la délivrance du brevet: **13.08.2003**
(21) Numéro de dépôt: 98402989.2
(22) Date de dépôt: 30.11.1998
(51) Int. Cl.: F02C 7/047, B64D 29/00, B64D 15/04

(54) **Dispositif d'évacuation d'air chaud pour capot d'entrée d'air de moteur à réaction à circuit de dégivrage**
Heissluftabfuhrvorrichtung für die Lufteinlasshaube eines Strahltriebwerkes mit Enteisungskreislauf
Hot air exhaust device for a jet engine air intake fairing with de-icing circuit

(30) Priorité: 02.12.1997 FR 9715136
(43) Date de publication de la demande: 09.06.1999
(73) Titulaire: AIRBUS FRANCE, 31060 Toulouse (FR)
(72) Inventeur: Porte, Alain, 31770 Colomiers (FR)
(74) Mandataire: Bonnetat, Christian

(56) Documents cités:
- EP-A- 0 205 283
- EP-A- 0 536 089
- GB-A- 986 878
- GB-A- 2 259 679
- US-A- 4 406 431
- US-A- 5 365 731
- GILLAN M A ET AL: "ENGINEERING NOTES. NOVEL NACELLE THERMAL ANTI-ICING EXHAUST GRILL FOR ENHANCED MIXING" JOURNAL OF AIRCRAFT, vol. 34, no. 6, novembre 1997, pages 811-813, XP000725999

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud.

A cet effet, un tel capot d'entrée d'air comporte :
- un bord d'attaque creux délimitant une chambre périphérique interne, fermée par une cloison interne (ou cadre) et pourvue d'au moins un orifice mettant en communication ladite chambre interne avec l'extérieur ; et
- une conduite, apte à être raccordée, à son extrémité arrière opposée audit bord d'attaque, audit circuit de circulation d'air chaud et, à son extrémité avant vers le bord d'attaque, à un injecteur injectant ledit air chaud dans ladite chambre interne.

Ainsi, l'air chaud sous pression injecté par ledit injecteur parcourt ladite chambre périphérique interne en la réchauffant et est évacué à travers ledit orifice.

Par le document US-A-5 365 731, on connaît déjà un capot d'entrée d'air de ce type comportant une pluralité de tels orifices d'évacuation de l'air chaud, pratiqués directement dans le bord d'attaque dudit capot, le débit d'air chaud de dégivrage étant contrôlé par la section desdits orifices. Un tel capot d'entrée d'air connu présente les inconvénients majeurs de fragiliser le bord d'attaque dudit capot (qui se trouve être l'élément le plus vulnérable d'une nacelle de moteur, car situé frontalement, et être difficilement réparable à cause de sa grande taille) et de dégrader de façon importante les performances aérodynamiques dudit capot. En effet, en ce qui concerne ce dernier inconvénient, lesdits orifices sont situés dans une forme de bord d'attaque favorisant l'écopage --et donc rendant difficile l'éjection d'air chaud-- et ceci durant toutes les phases de vol de l'aéronef lorsque le dégivrage ne fonctionne pas. De plus, les orifices d'éjection produisent une surface d'éjection importante, ce qui engendre une traînée sur une large portion du bord d'attaque, cette traînée étant accentuée par le fait que la surface de la nacelle, immédiatement en aval de cette surface aérodynamiquement polluée, se retrouve généralement elle aussi très perturbée, de sorte qu'elle engendre une traînée supplémentaire. Par ailleurs, dans un tel capot d'entrée d'air connu, il est difficile de corriger la section d'éjection durant des essais en vol, puisque cette section est constituée par des orifices pratiqués dans une pièce (le bord d'attaque) de grande dimension.

Par ailleurs, par le document EP-A-0 205 283, on connaît un capot d'entrée d'air dans lequel ladite conduite d'alimentation en air chaud sous pression est entourée par une structure métallique enveloppante comportant une tuyauterie dont l'extrémité libre forme l'orifice servant à l'éjection de l'air de dégivrage en arrière du bord d'attaque dudit capot. On évite alors les inconvénients précédents, mais dans ce dispositif connu, le contrôle du débit d'air chaud est obtenu par la section de ladite tuyauterie d'éjection, ainsi que par l'orientation d'ailettes disposées à l'extrémité libre de celle-ci. Il en résulte une mauvaise maîtrise du débit d'éjection et des nappes d'air chaud à l'extérieur. De plus, l'éjection de l'air chaud est très concentrée, ce qui peut endommager des structures voisines, sensibles à la chaleur. De toutes façons, un tel dispositif est la source d'un rayonnement thermique important, risquant également d'endommager lesdites structures. Enfin, le dispositif est onéreux, car constitué de pièces nombreuses devant être assemblées à l'aide de joints à durée de vie limitée, car soumis à des températures élevées.

On connaît également, par exemple par le document GB-A-2 259 679, un capot d'entrée d'air dans lequel l'air chaud de dégivrage est évacué à l'extérieur par une tuyauterie coudée, traversant ladite cloison interne, pour éjecter l'air chaud en arrière dudit bord d'attaque. Là encore, le débit d'air chaud est contrôlé par la section de la tuyauterie et par l'orientation d'ailettes disposées dans celle-ci. On retrouve donc dans ce capot d'entrée d'air les mêmes inconvénients que ceux mentionnés ci-dessus, à propos du document EP-A-0 205 283.

Enfin, le document EP-A-0 536 089 montre un capot d'entrée d'air dans lequel ladite cloison interne est pourvue d'un conduit en forme d'auge, dirigé vers l'arrière du bord d'attaque et ouvert en direction de la périphérie dudit capot d'entrée d'air. Le conduit en forme d'auge est obturé par une plaque percée d'une multitude d'orifices oblongs, dont la direction est orthogonale au bord d'attaque.

Grâce à cette disposition, lesdits orifices, qui servent à évacuer vers l'extérieur l'air chaud sous pression ayant réchauffé ledit bord d'attaque, peuvent se trouver dans la partie dudit capot disposée juste en arrière dudit bord d'attaque. Il en résulte donc que le bord d'attaque, qui est une pièce sensible du point de vue aérodynamique pour les performances du moteur et du point de vue de la maintenance, car exposée à des chocs divers, n'est pas fragilisé par lesdits orifices. Cependant, pour les raisons indiquées ci-dessus, une telle disposition ne permet pas d'optimiser, ni aérodynamiquement, ni thermiquement, l'éjection de l'air chaud de dégivrage.

La présente invention a pour objet de remédier à ces inconvénients.

A cette fin, selon l'invention, le capot d'entrée d'air pour moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique interne qui est fermée par une cloison interne, ladite cloison interne étant pourvue d'un conduit en forme d'auge, dirigé vers l'arrière dudit bord d'attaque et ouvert en direction de la périphérie dudit capot d'entrée d'air ;
- une conduite, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre interne ; et
- une pièce réalisée en un matériau résistant aux températures élevées et faisant partie de la surface externe dudit capot, en arrière dudit bord d'attaque, ladite pièce obturant ledit conduit en forme d'auge et étant percée de façon à mettre ladite chambre interne en communication avec l'extérieur,
est remarquable
- en ce que ladite pièce comporte un unique orifice qui présente une forme oblongue et qui est disposé parallèlement audit bord d'attaque, ledit orifice servant à calibrer le jet d'air chaud éjecté par ledit conduit en forme d'auge, tout en favorisant l'échange thermique entre ledit jet d'air chaud éjecté et l'air ambiant extérieur et en écartant ce jet d'air chaud dudit capot ; et
- en ce que ladite pièce s'étend longitudinalement dans ladite surface externe dudit capot, pour servir de protection thermique à celui-ci vis-à-vis dudit jet d'air chaud éjecté.

Ainsi, ledit orifice unique permet de maîtriser le débit d'éjection et, également, d'obtenir un échange thermique favorable entre l'air chaud éjecté et l'air ambiant extérieur, tout en contrôlant l'éclatement du jet d'air chaud afin de l'écarter des structures de la nacelle sensibles à la température. On évite ainsi les inconvénients des orifices des dispositifs de dégivrage connus, qui :
- quand ils se présentent sous la forme d'un orifice circulaire, concentrent trop la section d'éjection et procurent une surface d'échange réduite entre le jet d'air de dégivrage et l'air extérieur ambiant, l'énergie dudit jet étant trop importante de sorte que celui-ci risque d'atteindre les structures sensibles à la température et de les endommager ; et
- quand ils sont éclatés, en une multitude d'orifices, engendrent une traînée aérodynamique préjudiciable aux performances de l'aéronef, même lorsque le circuit de dégivrage ne fonctionne pas.

On remarquera de plus que, dans le capot conforme à la présente invention, ledit orifice unique peut être suffisamment en avant dudit capot pour que l'air chaud qu'il éjecte ne risque pas d'endommager les structures de la nacelle du moteur sensibles à la chaleur, telles que par exemple les capotages en matériau composite.

Le bord d'attaque est donc homogène sur les 360° de sa circonférence, sans excroissance, ni orifice de ventilation, ce qui préserve ses qualités aérodynamiques et de résistance mécanique.

Ledit orifice unique oblong peut présenter de nombreuses formes. Par exemple, il peut être de forme au moins approximativement rectangulaire, ses bords longitudinaux avant et arrière étant rectilignes et parallèles audit bord d'attaque.

Pour éviter tout évasement latéral dudit jet d'air chaud éjecté à la sortie dudit orifice unique oblong, ce qui risquerait de laisser la possibilité éventuelle audit jet de lécher --et donc de détériorer-- la surface externe du capot, extérieurement et latéralement à ladite pièce résistant aux températures élevées, il est avantageux que le bord longitudinal arrière dudit orifice oblong unique soit concave, pour communiquer audit orifice une largeur plus grande au voisinage de sa mi-longueur qu'au voisinage de ses extrémités. Ainsi, le débit d'air chaud éjecté par ledit orifice est plus grand au voisinage du centre de ladite pièce et plus faible en périphérie de cette dernière, de sorte que, tout en favorisant l'échange thermique du jet d'air chaud éjecté avec l'air ambiant extérieur, on concentre ledit air chaud sur la zone centrale de ladite pièce, en évitant l'endommagement thermique des parties de la surface externe du capot disposées latéralement à ladite pièce. Dans un mode de réalisation préféré de ce type, le bord longitudinal avant dudit orifice oblong unique est rectiligne et parallèle audit bord d'attaque, tandis que ledit bord longitudinal arrière concave dudit orifice est courbe.

Pour contrôler encore plus l'éclatement du jet d'air chaud éjecté, ledit orifice oblong unique peut comporter des générateurs de turbulence, par exemple constitués par des dents ou aspérités disposées à la périphérie dudit orifice. Ces générateurs de turbulence peuvent être portés par au moins l'un des bords longitudinaux avant ou arrière dudit orifice oblong unique. Ils peuvent être réalisés par découpe des bords dudit orifice dans ladite pièce résistant aux températures élevées ou par une ou plusieurs pièces rapportées à la périphérie dudit orifice. Lesdits générateurs de turbulence peuvent être disposés dans la surface de ladite pièce thermiquement résistante, ou bien être en saillie par rapport à celle-ci, par exemple par repliement vers l'intérieur dudit conduit en forme d'auge.

Pour éviter l'évasement latéral du jet d'air chaud éjecté, tel que cela a été mentionné ci-dessus, on peut prévoir alors qu'au moins les générateurs de turbulence --par exemple les dents-- qui se trouvent au voisinage des extrémités dudit orifice rabattent, vers le centre de ladite pièce thermiquement résistante, les parties latérales dudit jet d'air chaud éjecté.

De préférence, ledit conduit en forme d'auge se trouve périphériquement au voisinage de ladite conduite d'amenée de l'air chaud sous pression. Ainsi, ledit air chaud parcourt la totalité de la circonférence dudit bord d'attaque et on obtient une distribution très homogène dudit air chaud à l'intérieur de ce dernier et, donc, des performances de dégivrage élevées. De plus, un tel positionnement permet de faire en sorte que ladite pièce dans laquelle est pratiqué ledit orifice assure, par ses dimensions, la protection des zones en contact avec de l'air chaud évacué par ledit orifice. Ladite pièce peut de plus former la porte d'inspection de ladite conduite d'amenée d'air chaud. On bénéficie donc de la présence, obligatoire pour l'accès à la tuyauterie d'air de dégivrage, d'un panneau démontable et résistant aux températures élevées, situé immédiatement en arrière dudit orifice d'éjection. Une telle porte peut s'étendre longitudinalement dans la surface externe du capot sur une longueur suffisante pour protéger toute la partie de cette surface pouvant être soumise à l'action du flux d'air chaud éjecté par ledit orifice. De plus, en prévoyant plusieurs panneaux démontables pourvus d'orifices d'éjection différents, on peut facilement remplacer ledit orifice et tester différentes sections d'éjection.

Par ailleurs, il est avantageux que ledit conduit en forme d'auge s'évase en direction de la périphérie externe dudit capot. Ainsi, il peut présenter une forme aérodynamique favorisant l'éjection d'air.

Ledit conduit en forme d'auge peut faire partie intégrante de ladite cloison interne et être par exemple réalisé par emboutissage de celle-ci. Il peut également être constitué par une pièce rapportée à ladite cloison interne, dans un évidement de celle-ci.

Les figures du dessin annexé feront bien comprendre comment l'invention peut être réalisée. Sur ces figures, des références identiques désignent des éléments semblables.

La figure 1 montre, en perspective éclatée, un moteur d'aéronef à réaction et ses différents capotages.

Les figures 2 et 3 sont des vues en perspective partielle de l'avant, avec arrachement, de deux modes de réalisation du capot d'entrée d'air conforme à la présente invention.

La figure 4 est une vue en perspective de l'avant, avec arrachement, d'un mode de réalisation du capot d'entrée d'air conforme à la présente invention.

La figure 5 est une demi-coupe, schématique et partielle, de la partie avant d'un capot d'entrée d'air conforme à la présente invention.

La figure 6 est une vue partielle selon la flèche VI de la figure 5.

La figure 7 est une vue semblable à la figure 6, illustrant un mode de réalisation avantageux de l'orifice d'éjection unique.

Les figures 8 et 9 montrent, en vues semblables aux figures 6 et 7, des variantes de réalisation de l'orifice d'éjection unique.

La figure 10 est une demi-coupe, schématique et partielle, de la partie avant d'une variante du capot d'entrée d'air conforme à la présente invention.

La figure 11 est une vue partielle selon la flèche XI de la figure 10.

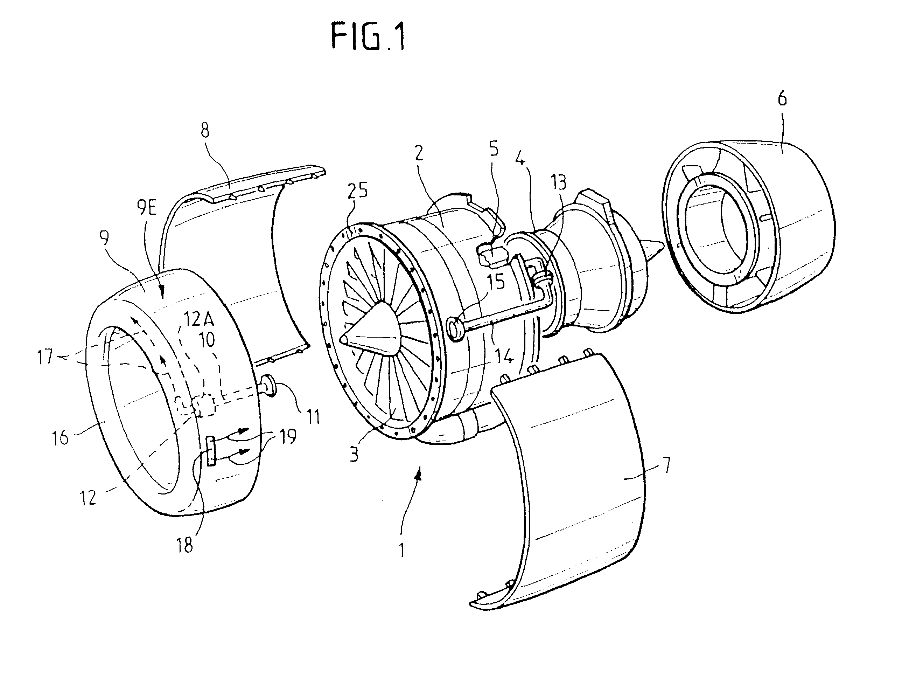

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

Comme cela est illustré schématiquement sur la figure 1, le capot d'entrée d'air 9 comporte une conduite interne 10, pourvue à son extrémité arrière dirigée vers le moteur 1 d'un élément de raccord 11 et à son extrémité avant logée dans le bord d'attaque creux 16 dudit capot d'entrée d'air d'un injecteur 12 pourvu d'un raccord 12A. Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud (par exemple à une température de 400°C) prélevé en 13 sur le moteur 1 est acheminé par les conduites 14 et 10 jusqu'à l'injecteur 12. Celui-ci peut donc souffler cet air chaud sous pression (flèches pointillées 17) à l'intérieur du bord d'attaque 16, pour le dégivrer. Un orifice oblong unique 18 est prévu dans la surface externe 9E du capot 9 pour l'évacuation à l'air libre (flèches 19) de l'air chaud ayant circulé à l'intérieur du bord d'attaque 16 (alors par exemple à une température de 200°C).

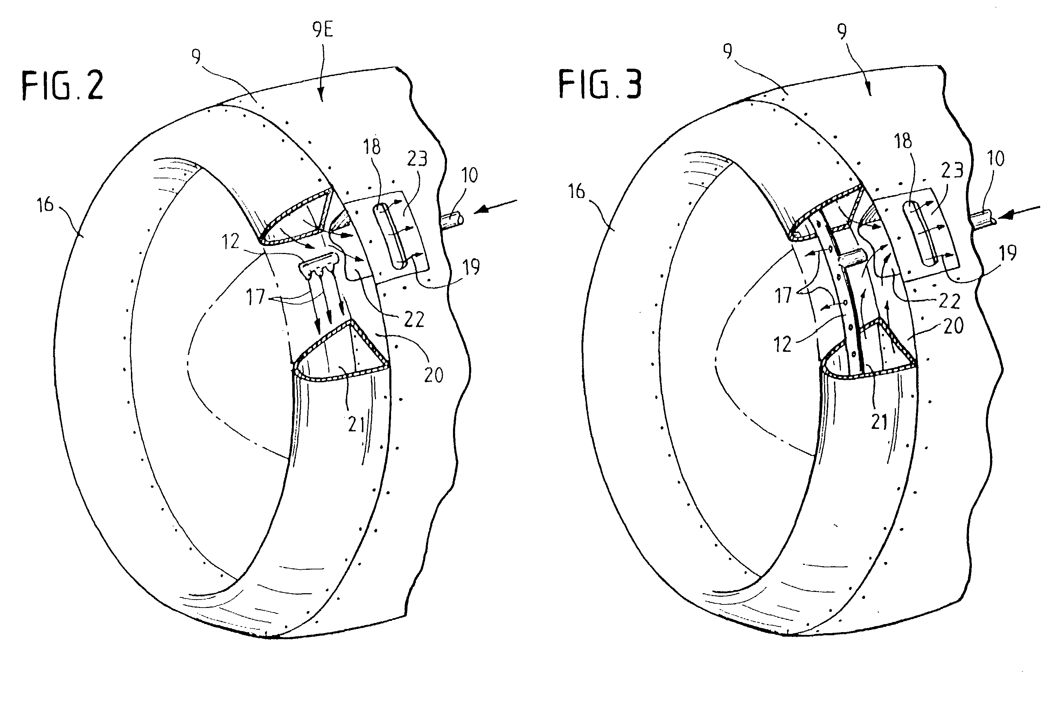

Comme le montrent en détail et à plus grande échelle les figures 2, 3, 4, 5 et 10, le bord d'attaque creux 16 est fermé du côté arrière par une cloison interne 20, de sorte qu'une chambre périphérique annulaire 21 est formée à l'intérieur dudit bord d'attaque 16. L'injecteur 12 injecte l'air chaud sous pression dans la chambre 21 et l'orifice oblong unique 18 met en communication ladite chambre 21 avec l'extérieur.

La cloison interne 20 est pourvue d'un conduit 22 en forme d'auge, dirigé et s'évasant vers l'arrière dudit bord d'attaque 16, c'est-à-dire du côté du capot 9 proprement dit, et ouvert en direction de la périphérie dudit capot d'entrée d'air 9. Le conduit 22 peut être réalisé par enfoncement de ladite cloison interne 21, par exemple par emboutissage, ou bien peut être constitué par une pièce rapportée à ladite cloison 20.

L'orifice oblong unique 18 est pratiqué dans une pièce 23 faisant partie de la surface externe 9E du capot 9, en arrière du bord d'attaque 16, et il se trouve en regard du conduit 22 en limitant la section de celui-ci.

Ainsi, l'air chaud 19 ayant réchauffé le bord d'attaque 16 est amené par le conduit 22 à l'orifice 18, qui l'évacue vers l'extérieur en en contrôlant le débit.

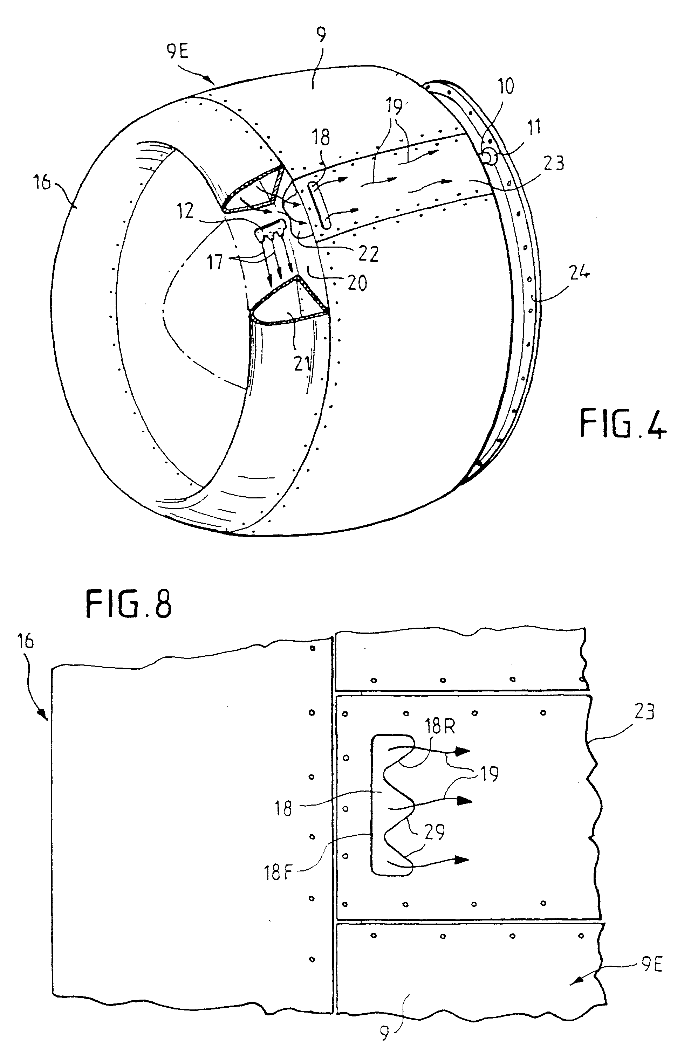

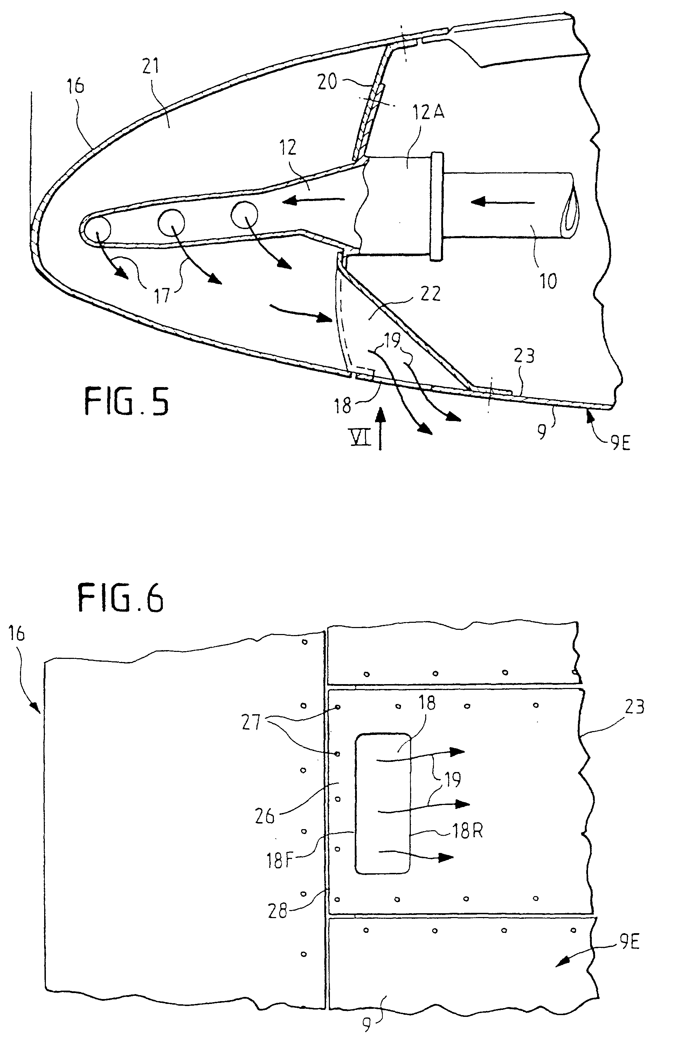

Les figures 2 et 3 montrent que l'injecteur 12 peut être quelconque : par exemple, il comporte des buses multiples (figure 2) ou il est constitué par un anneau percé (figure 3). Elles montrent également, ainsi que les figures 4 et 5, que le conduit 22 se trouve périphériquement au voisinage de la conduite 10. Ainsi, bien que la pièce 23 puisse être spécialement prévue pour obturer le conduit 22 (voir les figures 2 et 3), elle peut avantageusement constituer la porte prévue dans le capot 9 pour l'inspection de la conduite 10, comme cela est montré sur la figure 4. Dans les deux cas, la pièce 23 est en une matière résistant au feu et à la chaleur, par exemple une matière métallique. La pièce 23 peut s'étendre sur toute la longueur du capot 9. Sur la figure 4, on a représenté la bride 24 susceptible de coopérer avec la bride avant 25 du moteur, pour fixer ledit capot d'entrée d'air 9 à ce dernier.

L'orifice 18 est plus long que large et sa longueur est parallèle au bord d'attaque 16 du capot 9.

Dans le mode de réalisation des figures 5 et 6, l'orifice 18 présente un contour fermé sensiblement rectangulaire, ses bords longitudinaux avant 18F et arrière 18R étant parallèles audit bord d'attaque 16. Du côté de ce dernier, l'orifice 18 est limité par une bande latérale 26 de matière de ladite pièce 23, qui est comprise entre ledit bord longitudinal avant 18F de l'orifice 18 et le bord avant libre 28 de la pièce 23. Celle-ci peut donc être fixée à la cloison 20 par des rivets ou analogues 27.

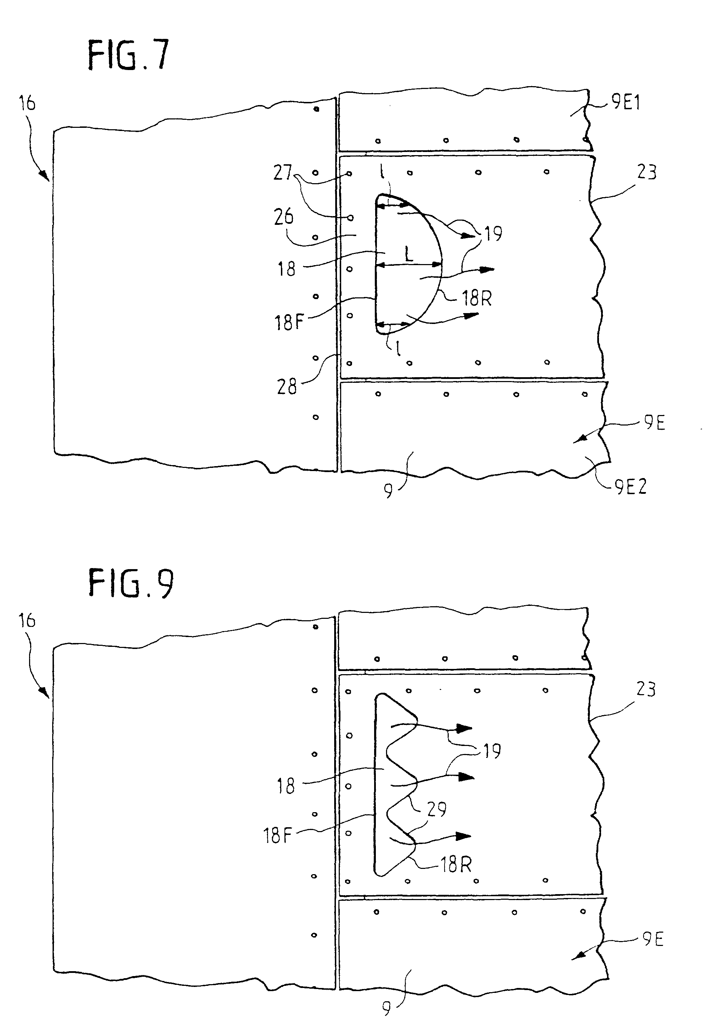

Dans la variante de réalisation de la figure 7, le bord longitudinal avant 18F de l'orifice oblong unique 18 est également rectiligne et parallèle audit bord d'attaque 16, mais, en revanche, le bord longitudinal arrière 18R dudit orifice est courbe et concave, de sorte que la largeur L dudit orifice au voisinage de la mi-longueur de celui-ci est plus grande que la largeur ℓ au voisinage des extrémités dudit orifice oblong 18. Ainsi, au centre dudit orifice, le débit d'air chaud éjecté est plus grand qu'aux extrémités dudit orifice, de sorte que l'air chaud est en majeure partie dirigé vers la zone centrale de la pièce 23 en évitant l'évasement latéral dudit jet d'air chaud éjecté. Celui-ci ne peut donc pas atteindre les parties 9E1 et 9E2 de la surface externe 9E du capot 9, disposées latéralement par rapport à la pièce 23. On évite donc tout endommagement thermique desdites parties 9E1 et 9E2 par ledit jet d'air chaud.

Dans les modes de réalisation des figures 8 et 9, l'orifice 18 comporte des aspérités ou dents 29 dans son contour, pour engendrer des turbulences dans le jet d'air chaud éjecté. On favorise ainsi l'échange thermique de ce dernier avec l'air ambiant extérieur. Bien que sur ces figures, lesdites dents 29 soient portées par le bord longitudinal arrière 18R dudit orifice, il va de soi que le bord longitudinal avant 18F peut également en porter, soit seul, soit en combinaison avec celles dudit bord longitudinal arrière 18R. Comme cela est particulièrement le cas pour le mode de réalisation de la figure 9, il est avantageux que lesdites dents 29, principalement celles qui se trouvent aux extrémités dudit orifice 18, rabattent vers le centre de la pièce 23, les parties latérales dudit jet d'air chaud éjecté, afin d'obtenir le même effet bénéfique que celui procuré par le mode de réalisation de la figure 7.

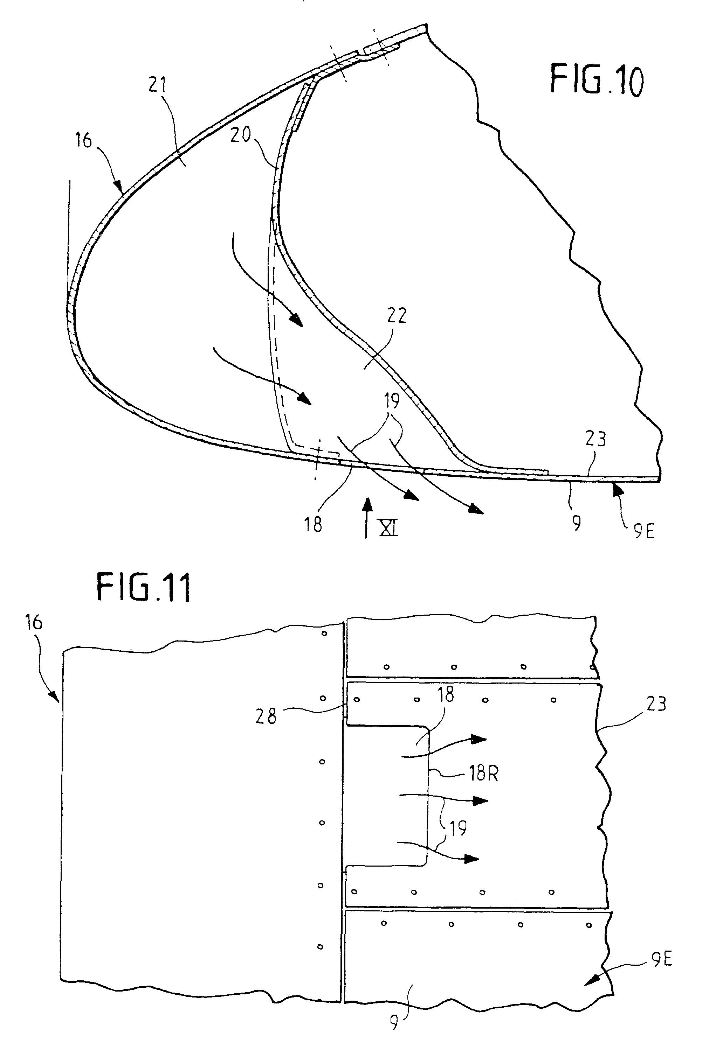

Dans le mode de réalisation des figures 10 et 11 (la conduite 10 et l'injecteur 12 n'étant pas représentés), l'orifice 18 se présente sous la forme d'une échancrure pratiquée dans le bord avant libre 28 de la pièce 23, disposé du côté du bord d'attaque 16, la bande 26 étant éliminée.

## Revendications

1. Capot d'entrée d'air (9) pour moteur à réaction (1), notamment pour aéronef, ledit capot d'entrée d'air (9) étant pourvu de moyens de dégivrage de son bord d'attaque (16) et comportant à cet effet :
- un bord d'attaque (16) creux délimitant une chambre périphérique interne (21) qui est fermée par une cloison interne (20), ladite cloison interne (20) étant pourvue d'un conduit (22) en forme d'auge, dirigé vers l'arrière dudit bord d'attaque (16) et ouvert en direction de la périphérie dudit capot d'entrée d'air (9) ;
- une conduite (10), apte à être raccordée, à son extrémité arrière opposée audit bord d'attaque (16), à un circuit d'air chaud sous pression (14) et, à son extrémité avant vers ledit bord d'attaque (16), à un injecteur (12) injectant ledit air chaud sous pression dans ladite chambre interne (21) ; et
- une pièce (23) réalisée en un matériau résistant aux températures élevées et faisant partie de la surface externe (9E) dudit capot (9), en arrière dudit bord d'attaque (16), ladite pièce (23) obturant ledit conduit (22) en forme d'auge et étant percée de façon à mettre ladite chambre interne (21) en communication avec l'extérieur,
**caractérisé :**
- **en ce que** ladite pièce (23) comporte un unique orifice (18) qui présente une forme oblongue et qui est disposé parallèlement audit bord d'attaque (16), ledit orifice servant à calibrer le jet d'air chaud éjecté par ledit conduit (22) en forme d'auge, tout en favorisant l'échange thermique entre ledit jet d'air chaud éjecté et l'air ambiant extérieur et en écartant ce jet d'air chaud dudit capot (9) ; et
- **en ce que** ladite pièce (23) s'étend longitudinalement dans ladite surface externe (9E) dudit capot (9), pour servir de protection thermique à celui-ci vis-à-vis dudit jet d'air chaud éjecté.

2. Capot d'entrée d'air (9) selon la revendication 1,
**caractérisé en ce que** le bord longitudinal arrière (18R) dudit orifice oblong unique (18) est concave, pour communiquer audit orifice une largeur plus grande au voisinage de sa mi-longueur qu'au voisinage de ses extrémités.

3. Capot d'entrée d'air (9) selon la revendication 2,
**caractérisé en ce que** le bord longitudinal avant (18F) dudit orifice oblong unique (18) est rectiligne et parallèle audit bord d'attaque (16), tandis que ledit bord longitudinal arrière concave (18R) dudit orifice est courbe.

4. Capot d'entrée d'air (9) selon l'une des revendications 1 à 3, **caractérisé en ce que** ledit orifice oblong unique (18) comporte des générateurs de turbulence (29).

5. Capot d'entrée d'air (9) selon la revendication 4,
**caractérisé en ce que** lesdits générateurs de turbulence (29) sont portés par au moins l'un des bords longitudinaux avant ou arrière (18F, 18R) dudit orifice oblong unique (18).

6. Capot d'entrée d'air (9) selon la revendication 5,
**caractérisé en ce que** lesdits générateurs de turbulence (29) sont portés par le bord arrière (18R) dudit orifice oblong unique (18) et **en ce qu'**au moins ceux desdits générateurs de turbulence (29) qui se trouvent au voisinage des extrémités dudit orifice (18) rabattent, vers le centre de ladite pièce (23), les parties latérales dudit jet d'air chaud éjecté.

7. Capot d'entrée d'air (9) selon l'une des revendications 1 à 6, **caractérisé en ce que** ladite pièce (23) est une porte d'inspection de ladite conduite (10).

8. Capot d'entrée d'air (9) selon l'une des revendications 1 à 7, **caractérisé en ce que** ledit conduit en forme d'auge (22) se trouve périphériquement au voisinage de ladite conduite (10).

9. Capot d'entrée d'air (9) selon l'une des revendications 1 à 8, **caractérisé en ce que** ledit conduit en forme d'auge (22) s'évase en direction de la périphérie dudit capot d'entrée d'air (9).

10. Capot d'entrée d'air (9) selon l'une des revendications 1 à 9, **caractérisé en ce que** ledit conduit en forme d'auge (22) fait partie intégrante de ladite cloison interne (20).

11. Capot d'entrée d'air (9) selon l'une des revendications 1 à 9, **caractérisé en ce que** ledit conduit en forme d'auge (22) est constitué par une pièce rapportée à ladite cloison interne (20).

## Patentansprüche

1. Lufteinlasshaube (9) für ein Strahltriebwerk (1) insbesondere für Flugzeuge, wobei die genannte Lufteinlasshaube (9) mit Mitteln zur Enteisung ihrer Eintrittskante (16) versehen ist, die zu diesem Zweck Folgendes umfassen:
- eine hohle Eintrittskante (16), die eine Umfangsinnenkammer (21) begrenzt, die durch eine Innentrennwand (20) verschlossen ist, wobei die genannte Innentrennwand (20) mit einem Kanal (22) in Trogform versehen ist, der zum hinterer Teil der genannten Eintrittskante (16) gerichtet und in Richtung des Umfangs der genannten Lufteinlasshaube (9) offen ist;
- eine Leitung (10), die an ihrem hinteren, entgegengesetzt zur genannten Eintrittskante (16) liegenden Ende mit einem Heißdruckluftkreis (14) und an ihrem vorderen Ende zur genannten Eintrittskante (16) hin mit einer Einspritzdüse (12) verbunden werden kann, die die genannte heiße Druckluft in die genannte Innenkammer (21) einspritzt; und
- ein aus einem hochtemperaturfesten Material hergestelltes und einen Bestandteil der Außenfläche (9E) der genannten Haube (9) bildendes Teil (23) hinter der genannten Eintrittskante (16), wobei das genannte Teil (23) den genannten trogformigen Kanal (22) verschließt, der so durchbohrt ist, dass er die genannte Innenkammer (21) mit der Außenluft verbindet,
**dadurch gekennzeichnet,**
- **dass** das genannte Teil (23) eine einzige Öffnung (18) umfasst, die eine längliche Form besitzt und parallel zur genannten Eintrittskante (16) angeordnet ist, wobei die genannte Öffnung dazu dient, den vom genannten trogformigen Kanal (22) ausgestoßenen Heißluftstrahl zu kalibrieren und dabei den Wärmeaustausch zwischen dem genannten ausgestoßenen Heißluftstrahl und der Außenumgebungsluft zu begünstigen und diesen Heißluftstrahl von der genannten Haube (9) abzulenken; und
- **dass** sich das genannte Teil (23) längs in die genannte Außenfläche (9E) der genannten Haube (9) erstreckt, um dieser als Wärmeschutz gegenüber dem ausgestoßenen Heißluftstrahl zu dienen.

2. Lufteinlasshaube (9) gemäß Anspruch 1,
**dadurch gekennzeichnet,**
**dass** die hintere Längskante (18R) der genannten einzigen länglichen Öffnung (18) konkav ist, damit die genannte Öffnung in der Mitte ihrer Längsausdehnung eine größere Breite besitzt als an ihren Enden.

3. Lufteinlasshaube (9) gemäß Anspruch 2,
**dadurch gekennzeichnet,**
**dass** die vordere Längskante (18F) der genannten einzigen länglichen Öffnung (18) geradlinig ist und parallel zur genannten Eintrittskante (16) verläuft, wohingegen die hintere konkave Längskante (18R) der genannten Öffnung gekrümmt ist.

4. Lufteinlasshaube (9) gemäß einem der Ansprüche 1 bis 3,
**dadurch gekennzeichnet,**
**dass** die genannte einzige längliche Öffnung (18) Turbulenzerzeuger (29) umfasst.

5. Lufteinlasshaube (9) gemäß Anspruch 4,
**dadurch gekennzeichnet,**
**dass** die genannten Turbulenzerzeuger (29) mindestens von der vorderen oder hinteren Längskante (18F, 18R) der genannten einzigen länglichen Öffnung (18) getragen werden.

6. Lufteinlasshaube (9) gemäß Anspruch 5,
**dadurch gekennzeichnet,**
**dass** die genannten Turbulenzerzeuger (29) von der hinteren Kante (18R) der genannten einzigen länglichen Öffnung (18) getragen werden und dadurch, dass mindestens die genannten Turbulenzerzeuger (29), die sich an den Enden der genannten öffnung (18) befinden, zur Mitte des genannten Teils (23) hin die Seitenbereiche des genannten ausgestoßenen Heißluftstrahls ableiten.

7. Lufteinlasshaube (9) gemäß einem der Ansprüche 1 bis 6,
**dadurch gekennzeichnet,**
**dass** das genannte Teil (23) eine Kontrolltür der genannten Leitung (10) ist.

8. Lufteinlasshaube (9) gemäß einem der Ansprüche 1 bis 7,
**dadurch gekennzeichnet,**
**dass** sich der genannte trogförmige Kanal (22) am Umfang an der genannten Leitung (10) befindet.

9. Lufteinlasshaube (9) gemäß einem der Ansprüche 1 bis 8,
**dadurch gekennzeichnet,**
**dass** sich der genannte trogförmige Kanal (22) in Richtung des Umfangs der genannten Lufteinlasshaube (9) aufweitet.

10. Lufteinlasshaube (9) gemäß einem der Ansprüche 1 bis 9,
**dadurch gekennzeichnet,**
**dass** der genannte trogförmige Kanal (22) fester Bestandteil der genannten Innentrennwand (20) ist.

11. Lufteinlasshaube (9) gemäß einem der Ansprüche 1 bis 9,
**dadurch gekennzeichnet,**
**dass** der genannte trogförmige Kanal (22) von einem an die genannte Innentrennwand (20) angesetzten Teil gebildet wird.

## Claims

1. An air inlet cowl (9) for a jet engine (1), especially for an aircraft, said air inlet cowl (9) being equipped with means for de-icing its leading edge (16) and comprising, for this purpose:
- a hollow leading edge (16) delimiting an internal peripheral chamber (21) which is closed by an internal partition (20), said internal partition (20) being equipped with a trough-shaped duct (22) directed toward the rear of said leading edge (16) and open toward the periphery of said air inlet cowl (9);
- a pipe (10) which can be connected, at its rear end away from said leading edge (16), to a pressurized hot air circuit (14) and, at its front end toward said leading edge (16), to an injector (12) injecting said pressurized hot air into said internal chamber (21); and
- a part (23) made of a material that can withstand high temperatures and forms part of the external surface (9E) of said cowl (9), to the rear of said leading edge (16) , said part (23) closing off said trough-shaped duct (22) and being pierced in such a way as to place said internal chamber (21) in communication with the outside,
**characterized:**
- **in that** said part (23) comprises a single orifice (18) which has an oblong shape and is arranged parallel to said leading edge (16), said orifice serving to calibrate the jet of hot air ejected by said trough-shaped duct (22), while at the same time encouraging heat exchange between said jet of ejected hot air and the external ambient air and keeping this jet of hot air away from said cowl (9); and
- **in that** said part (23) extends longitudinally in said external surface (9E) of said cowl (9) to act as a thermal protection for the latter with respect to said jet of ejected hot air.

2. The air inlet cowl (9) claimed in claim 1,
**characterized in that** the rear longitudinal edge (18R) of said single oblong orifice (18) is concave, to give said orifice a width which is greater mid-way along its length than it is at its ends.

3. The air inlet cowl (9) claimed in claim 2,
**characterized in that** the front longitudinal edge (18F) of said single oblong orifice (18) is straight and parallel to said leading edge (16), while said concave rear longitudinal edge (18R) of said orifice is curved.

4. The air inlet cowl (9) claimed in claims 1 to 3,
**characterized in that** said single oblong orifice (18) comprises turbulence generators (29).

5. The air inlet cowl (9) claimed in claim 4,
**characterized in that** said turbulence generators (29) are borne by at least one of the front or rear longitudinal edges (18F, 18R) of said single oblong orifice (18).

6. The air inlet cowl (9) claimed in claim 5,
**characterized in that** said turbulence generators (29) are borne by the rear edge (18R) of said single oblong orifice (18) and at least those of said turbulence generators (29) which are situated near the ends of said orifice (18) turn the lateral parts of said jet of ejected hot air toward the center of said part (23).

7. The air inlet cowl (9) claimed in claims 1 to 6,
**characterized in that** said part (23) is a door for inspecting said pipe (10).

8. The air inlet cowl (9) claimed in claims 1 to 7,
**characterized in that** said trough-shaped duct (22) is peripherally close to said pipe (10).

9. The air inlet cowl (9) claimed in claims 1 to 8,
**characterized in that** said trough-shaped duct (22) widens toward the periphery of said air inlet cowl (9).

10. The air inlet cowl (9) claimed in claims 1 to 9,
**characterized in that** said trough-shaped duct (22) forms an integral part of said internal partition (20).

11. The air inlet cowl (9) claimed in claims 1 to 9,
**characterized in that** said trough-shaped duct (22) consists of a part attached to said internal partition (20).
